# EUROPÄISCHE PATENTSCHRIFT

(11) **EP 3 326 448 B1**
(45) Veröffentlichungstag und Bekanntmachung des Hinweises auf die Patenterteilung: **11.03.2020**
(21) Anmeldenummer: 16002512.8
(22) Anmeldetag: 24.11.2016
(51) Int. Cl.: A01D 89/00

(54) **LANDWIRTSCHAFTLICHE MASCHINE MIT EINER PICKUP-VORRICHTUNG**
AGRICULTURAL MACHINE WITH A PICKUP DEVICE
MACHINE AGRICOLE COMPRENANT UN DISPOSITIF DE RAMASSAGE

(43) Veröffentlichungstag der Anmeldung: 30.05.2018
(73) Patentinhaber: Knüsel, Josef, 6403 Küssnacht am Rigi (CH)
(72) Erfinder: Knüsel, Josef, 6403 Küssnacht am Rigi (CH)
(74) Vertreter: Reb, Carina

(56) Entgegenhaltungen:
- EP-A1- 3 210 460
- WO-A1-87/06793
- US-A- 2 862 347
- US-A- 4 184 313
- US-A1- 2015 373 908

## Beschreibung

Die vorliegende Erfindung betrifft eine landwirtschaftliche Maschine zur Bearbeitung und Förderung von Erntegütern wie beispielsweise Gras, Luzerne, Klee, Futter, Silage, sonstiges Mähgut, Heu, Stroh usw. Ein treffender Oberbegriff hierfür ist Futter- bzw. Halmgut. Die landwirtschaftliche Maschine weist hierfür mindestens eine Pickup-Vorrichtung auf, d.h. eine Vorrichtung, die mindestens eine rotierende Walze mit daran angeordneten einzelnen Förderelementen oder -zinken für die Aufnahme des Futter- bzw. Halmguts vom Boden aufweist.

Bei der landwirtschaftlichen Maschine kann es sich hierbei beispielsweise generell um Schwader, vor allem eben um Pickup-Schwader oder um Bandschwader handeln, oder aber auch um Heuwender, Schwadräumer, Ladewagen, Rundballenpressen, Großballenpressen, Ballenpressen generell, Feldhäcksler usw.

Primäres Ziel solcher Pickup-Vorrichtungen ist einerseits, das Futter- bzw. Halmgut möglichst schonend aufzunehmen. Die eiweißreichen Blätter sollen hierbei möglichst vollständig vom Boden mit aufgenommen werden und nicht nur die eiweißärmeren und schwerer verdaulichen Stiele. Andererseits soll weitestgehend vermieden werden, Erde und Steinchen mit aufzunehmen und so die Qualität des Futters herabzusetzen.

Die Leistungsfähigkeit solcher landwirtschaftlicher Maschinen bzw. ihrer Pickup-Vorrichtungen hängt unter anderem davon ab, wie gut die sogenannte "Abtastung" des Bodens mit dem darauf liegenden Futter- bzw. Halmgut stattfindet. Mit anderen Wörtern hängen gute Leistungs- bzw. Ernteergebnisse einer Pickup-Vorrichtung davon ab, wie genau die Förderelemente bzw. - zinken der Pickup-Walze über dem Boden kreisen. Sie dürfen dieses nicht zu hoch über dem Boden tun, weil dann zuviel Futter- bzw. Halmgut liegen bleibt und aber auch nicht zu tief, weil dann die Förderelemente bzw. -zinken am Boden kratzen. Hierbei nehmen sie Erde und Steinchen auf und biegen sich darüber hinaus beim Kontakt mit dem Boden, sodass sie nicht mehr in dem optimalen Anstellwinkel das Futter- bzw. Halmgut greifen.

Weitere Ziele beim Betrieb einer guten Pickup-Vorrichtung sind ein ruhiger Lauf sowie die Schonung des Bodens. Üblicherweise sind herkömmliche Pickup-Vorrichtungen mit zwei Stützvorrichtungen in Form von Stützrollen bzw. schwenkbaren Laufrädern ausgestattet. Es sind vereinzelt auch Laufkugeln bekannt. Der Nachteil solcher Lauf- und Stützvorrichtungen ist jedoch, dass sie hoch bauen, insbesondere dann, wenn der Durchmesser der Rolle bzw. Rades wünschenswerterweise relativ groß sein soll, zugunsten eines ruhigen Laufs der Pickup-Vorrichtung. Die Lauf- und Stützvorrichtungen sind hinter der Pickup-Walze angeordnet, und zwar wegen ihrer Größe konstruktionsbedingt relativ weit hinter der Pickup-Walze. Dieses wiederum ist einer qualitativ hochwertigen Abtastung abträglich, weil die Zinken der Pickup-Walze beim Überfahren einer Bodenwelle bereits den Boden gekratzt haben, bevor die Lauf- und Stützvorrichtung dazu kommt, die Pickup-Walze anzuheben. Und wenn die Lauf- und Stützvorrichtung dieses dann tut, ist eine Anhebung der Zinken bzw. der Pickup-Walze unter Umständen nicht mehr nötig und somit bleibt in der Folge in Fahrtrichtung hinter der Bodenwelle Futter- bzw. Halmgut wiederum liegen.

Bei seitlicher Beanspruchung oder Kurvenfahrten lässt die Bodenschonung von herkömmlichen Lauf- und Stützvorrichtungen in Form von Rollen, Rädern oder gar Kufen zu wünschen übrig.

Die WO 87/06793 A1 offenbar eine Heuwerbungsmaschine mit einer Lauf- und Stützvorrichtung, die 4 Stützräder und zwei drehbare Abstützteller umfasst. Die beiden Abstützteller sind innen am Rand an je einem schwenkbar angeordneten Walzen-Element angeordnet und erfüllen den Zweck, die Walzen-Elemente im Rahmen ihrer Schwenkbarkeit an eine Bodenerhebung oder -vertiefung anzupassen. Die Nachteile einer Laufvorrichtung mit Stützrädern bleiben hierbei bestehen. Des Weiteren kann die Bodenanpassung aufgrund der vorderen Stützräder höchstens auf kleine Bodenerhebungen oder -vertiefungen reagieren, die zwischen den beiden vorderen Stützrädern auftreten.

Die Aufgabe der vorliegenden Erfindung ist, unter Vermeidung der oben aufgezeigten Nachteile, eine neue landwirtschaftliche Maschine mit einer Pickup-Vorrichtung zu stellen, welche die Aufnahme des Futter- bzw. Halmguts nochmals verbessert, die Bodenschonung ebenfalls verbessert und generell in ihren Lauf-Eigenschaften und in ihrer Anwendung optimiert ist.

Die Lösung der Aufgabe wird durch den unabhängigen Vorrichtungsanspruch 1 und den unabhängigen Verfahrensanspruch 15 beschrieben. Vorteilhafte Ausführungen finden sich in den entsprechenden abhängigen Ansprüchen. Die Lösung der Aufgabe besteht zunächst in der Konzeption bzw. Anordnung mindestens einer Lauf- und Stützvorrichtung an der Pickup-Vorrichtung mit mindestens zwei Walzen-Elementen, wobei diese Lauf- und Stützvorrichtung mindestens einen annähernd kreisförmig konvex gewölbten Gleitteller je Walzen-Element der Pickup-Vorrichtung umfasst. Die Unterseite so eines Gleittellers kann optional zentral plan abgeflacht sein, zwingend sind jedoch sich konvex hochwölbende Ränder, und zwar annähernd kreisförmig.

Weiterhin erfindungsgemäß ist der Ort der Anordnung, an dem eine erfindungsgemäße Lauf- und Stützvorrichtung angeordnet ist. Die Gleitteller sind hierbei vorzugsweise so nahe wie möglich an der Pickup-Walze angeordnet. Der Gleitteller bildet in Fahrtrichtung einen vordersten Punkt der Lauf- und Stützvorrichtung, in konkretem Fall ist es der vordere, obere Rand des Gleittellers, aus dem eine gedachte Vertikale vorzugsweise mindestens eine Tangente oder vorzugsweise eine Sekante eines gedachten Kreises (sogenannter Flugkreis) darstellt, den die äußersten distalen Punkte der Förderelemente bzw. -zinken der Pickup-Walze beim Beschreiben ihrer Rotationsbewegung bilden. Mit anderen Wörtern, ist ein erfindungsgemäßer Gleitteller relativ flach ausgestaltet und konsequenterweise so nahe bzw. so unterhalb wie möglich zu der Pickup-Walze angeordnet.

Betreffend der Fahrtrichtung einer erfindungsgemäßen landwirtschaftlichen Maschine mit einer erfindungsgemäßen Pickup-Vorrichtung sei erwähnt, dass die Pickup-Vorrichtung grundsätzlich gezogen oder geschoben werden kann, wegen der Vermeidung von Verschmutzung des Futter- bzw. Halmguts ist jedoch geschobener Frontbetrieb bevorzugt.

Der große Vorteil dieser erfindungsgemäßen Anordnung eines Gleittellers ist eine optimale Führung der Pickup-Vorrichtung und eine verbesserte Abtastung des Bodens. Die in Absatz [0005] beschriebene "Verspätung" in der Reaktion auf Bodenwellen ist eliminiert. Außerdem ergeben Gleitteller einen ruhigeren, holperfreieren Lauf der Pickup-Vorrichtung, weil sie flächig über den Boden gleiten, ungeachtet kleinerer Bodenunebenheiten.

Ein weiterer Vorteil einer erfindungsgemäßen Pickup-Vorrichtung mit mindestens einer Lauf- und Stützvorrichtung in Form von Gleittellern ist eine erhöhte Stabilität des Rahmens der Pickup-Vorrichtung und seiner bodengestützten Auflagen. Hierfür sind weiterhin erfindungsgemäß Stabilisatoren vorgesehen, welche die Gleitteller zusätzlich zu einer in Fahrtrichtung vorderen Befestigung der Gleitteller an einem vorderen Teil eines Pickup-Rahmens vorzugsweise auch in einer hinteren Befestigung an einem hinteren Teil des Pickup-Rahmens befestigen.

Die Stabilisatoren umfassen vorzugsweise mindestens eine Blattfeder für eine geführte, limitierte und federunterstützte Beweglichkeit.

Der vordere Befestigungspunkt der Gleitteller ist gemäß einer ersten Basis-Ausgestaltungsvariante fix, d.h. die Gleitteller sind nicht drehbar. Es hat sich bei Anwendungen in Hanglagen und unter bestimmten Bedingungen gezeigt, dass eine "Alpin-Version" einer erfindungsgemäßen Pickup-Vorrichtung mehr seitliche Stabilität aufweist, wenn die Gleitteller nicht drehbar sind.

Solche fixen Gleitteller können an ihrer konvexen Unterseite auch in Fahrtrichtung angeordnete Längsrillen aufweisen, welche die seitliche Stabilität nochmals verbessern.

Weiterhin können solche fix angeordneten Gleitteller auch eine ovale oder kufenförmige Form haben, erfindungsgemäß bleibt jedoch immer, dass die Ränder der Gleitteller zugunsten einer optimalen Bodenschonung rundum konvex aufgebogen sind.

Die vordere Befestigung einer erfindungsgemäßen Pickup-Vorrichtung umfasst weiterhin vorzugsweise eine Höhenverstellung, sodass die relative Höhe des Gleittellers zu der Pickup-Walze bzw. zu ihren Förderelementen bzw. -zinken einstellbar ist. Unterschiedliche Höhen der Gleitteller können für unterschiedliche Anwendungen erforderlich sein, man kann darüber hinaus aber auch auf unterschiedliche Walzendurchmesser oder Zinkenlängen bzw. auf deren Abnützungsgrad reagieren.

Die besagte Höhenverstellung kann beispielsweise mittels einer Gewindestange realisiert sein, die zentral an der konkaven Oberseite des Gleittellers angeschweißt oder angeordnet ist und mittels einer Mutter und Kontermutter beliebig innerhalb eines Einstellbereichs der Gewindelänge der Gewindestange in einer Aufnahme fixierbar ist. Es wäre auch möglich, einen Stellmotor anzuordnen, der dann auch eine laufende Höhenverstellbarkeit während des Betriebs gewährleistet.

Es kann des Weiteren vorgesehen sein, auswechselbare Gleitteller vorzusehen, die jeweils als zweiter, unterer Gleitteller an einem ersten, oberen Gleitteller angeschraubt sind oder statt an einem oberen, vollen Gleitteller auch nur an einem Aufnahmerahmen oder an einer Halterung.

Die konvexe Unterseite eines erfindungsgemäßen Gleittellers kann oberflächenbehandelt sein, beispielsweise poliert oder pulverbeschichtet oder lackiert oder nanobeschichtet, sei es zur Reibungsminimierung oder/und zur Vermeidung von Verschmutzung.

Eine bevorzugte Ausgestaltungsvariante einer erfindungsgemäßen Pickup-Vorrichtung mit Gleittellern oder erfindungsgemäßen Lauf- und Stützvorrichtung hat jedoch drehbare Gleitteller. Hierfür kann zwischen der beschriebenen Aufnahme und einer Welle mindestens ein Dreh- bzw. Kugel- bzw. Kegelrollen- bzw. Wälzlager angeordnet sein. Oder eine Achse ist fix in der Aufnahme angeordnet und ein Dreh- bzw. Kugel- bzw. Kegelrollen- bzw. Wälzlager ist zwischen der Achse und dem Gleitteller, dem oberen Gleitteller oder der Halterung vorgesehen.

Auch diese im vorhergehenden Absatz beschriebene, bevorzugte Ausgestaltungsvariante einer erfindungsgemäßen Lauf- und Stützvorrichtung umfasst vorzugsweise eine Höhenverstellung. Diese kann erneut einfach realisiert sein, indem die beschriebene Welle oder Achse eine Gewindestange ist, die mittels Zentrierscheiben und Muttern und Kontermuttern innerhalb der Gewindelänge beliebig hoch oder tief gefasst wird. Optional kann ein Stellmotor vorgesehen sein, der eine laufende Höhenverstellung während des Betriebs erlaubt.

Die mehreren Pickup-Walzen einer erfindungsgemäßen Pickup-Vorrichtung können starr sein und Zinkenreihen aufweisen, die linear oder aber auch schraubenförmig bzw. helikoidal angeordnet sind.

Unabhängig von der Zinkenreihen-Anordnung jedoch ist es bevorzugt, eine biegsame Welle oder Walze als Pickup-Walze vorzusehen, die sich in axialer Richtung Bodenerhebungen oder -senkungen anpassen kann.

Die Pickup-Walze kann auch zweigeteilt sein, wie beispielsweise in einer Europäischen Patentanmeldung EP 15 002 536.9 des gleichen Anmelders beschrieben.

Die erfindungsgemäße Pickup-Vorrichtung mit erfindungsgemäßen Gleittellern umfasst eine Pickup-Walze aus mindestens zwei Walzen-Elementen, wobei jedem Walzen-Element mindestens eine Lauf- und Stützvorrichtung mit mindestens einem Gleitteller zugeordnet ist bzw. miteinander befestigt sind. Auf diese Weise ist eine gliederförmige Pickup-Walze realisiert, die sich auf nochmals verbesserte Weise Bodenunebenheiten anpassen kann.

Die einzelnen Walzen-Elemente sind hierbei so gelagert, dass sie eine annähernd vertikale Hubbewegung beschreiben können. Die maximale Hubbewegung, welche die Walzen-Elemente beschreiben können, ist vorzugsweise mittels nicht näher dargestellter Federn so federunterstützt bzw. austariert, dass alleine das Gewicht der Walzen-Elemente sie vorzugsweise annähernd in der Mitte ihrer maximalen Hubbewegung "pendelnd" hält.

Zur Übertragung des Antriebsmomentes der Pickup-Walze können die einzelnen Walzen-Elemente untereinander mit jeweils einem Kreuz- oder Kardangelenk verbunden sein, oder auch schlicht mit einem Freigelenk, welches das nötige Spiel erlaubt.

Als leichte und mechanisch einfachere bzw. wartungsärmere Ausgestaltungsvariante kommt in Betracht, pro Walzen-Element einen Einzelantrieb anzuordnen, hydraulisch, pneumatisch oder insbesondere in Form eines kleinen Elektromotors, jeweils für jedes Walzen-Element.

Eine erfindungsgemäße landwirtschaftliche Maschine mit einer erfindungsgemäßen Pickup-Vorrichtung mit Gleittellern umfasst vorzugsweise einen Förderrotor bzw. eine angetriebene Förderhilfe, wie sie beispielsweise in unterschiedlichen Ausgestaltungsvarianten in der EP 15 002 536.9 des gleichen Anmelders beschrieben ist.

Diese Förderhilfe sorgt für einen optimalen Futterfluss von der Pickup-Walze weg, hin zu einem Querförderband. Darüber hinaus umfasst eine weiterhin bevorzugte, besonders komplette Ausgestaltungsvariante einer landwirtschaftlichen Maschine mit einer erfindungsgemäßen Pickup-Vorrichtung mit Gleittellern einen sogenannten Rollenniederhalter, der ohne Antrieb sein kann und ebenfalls den Futterfluss optimiert.

Die offenbarten unterschiedlichen Ausgestaltungsvarianten einer erfindungsgemäßen landwirtschaftlichen Maschine mit einer erfindungsgemäßen Pickup-Vorrichtung sind hinsichtlich der nicht grundfunktionsrelevanten Merkmale beliebig miteinander kombinierbar. So sind beispielsweise die Ausgestaltungsvarianten mit Stabilisatoren mit den fixen oder den drehbaren Gleittellern reziprok kombinierbar. Des Weiteren sind die Höhenverstellungen gleichermaßen bei den Ausgestaltungsvarianten mit fixen Gleittellern oder bei denen mit drehbaren Gleittellern möglich. Die Auswechselbarkeit des unteren Gleittellers ist mit allen anderen beschriebenen Ausgestaltungsvarianten kombinierbar, sowie die Oberflächenbehandlung und dieses beides wiederum auch reziprok. Das Gleiche gilt für die helikoidale Zinkenanordnung und gleichermaßen für alle Ausgestaltungsvarianten, die auf eine verbesserte Bodenanpassung mittels mehrteiliger Pickup-Walze abzielen, wiederum egal, ob ein Antrieb oder mehrere Einzelantriebe pro Walzen-Element vorgesehen sind.

Die vorliegende Anmeldung offenbart ein Verfahren zur Anwendung einer wie offenbarten landwirtschaftlichen Maschine mit einer Pickup-Vorrichtung, einem Querförderband, einem Förderrotor und einem Rollenniederhalter, wobei die Pickup-Vorrichtung dreh- und höhenverstellbare Lauf- und Stützvorrichtungen mit Gleittellern umfasst, unter Ausführung folgender grundsätzlicher Verfahrensschritte:
a) - Einstellen der Höhenverstellung der Lauf- und Stützvorrichtung;
b) - Rotieren einer Pickup-Walze in einer Rotation;
c) - Rotieren des Förderrotors in einer Gegenrotation;
d) - Rotieren des Querförderbandes in einer Querrotation;
e) - Losfahren mit der landwirtschaftlichen Maschine in einer Fahrtrichtung.

Eine erfindungsgemäße landwirtschaftliche Maschine mit einer erfindungsgemäßen Pickup-Vorrichtung bringt folgende Vorteile:
- Die Aufnahme des Futter- bzw. Halmguts ist optimiert.
- Das Futter- bzw. Halmgut ist weniger verschmutzt.
- Die Abtastung des Bodens ist verbessert.
- Es findet so gut wie kein Bodenkontakt mehr statt.
- Die Stützung und die Führung der Pickup-Vorrichtung ist optimiert.
- Der Lauf ist ruhiger.
- Die Bodenschonung ist verbessert.
- Die Lauf- und Stützvorrichtung ist stabiler als mit Laufrollen, nicht zuletzt wegen der zweifachen Befestigung und den Stabilisatoren.
- Die Lauf- und Stützvorrichtung ist höhenverstellbar.
- Die Gleitteller sind auswechselbar.
- Die Bodenanpassung ist durch die biegsame oder gliederförmige Pickup-Walze optimiert.

Weitere oder vorteilhafte Ausgestaltungen einer erfindungsgemäßen landwirtschaftlichen Maschine mit einer erfindungsgemäßen Pickup-Vorrichtung bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

Es zeigen dabei
Fig. 1 eine symbolische und beispielhafte Seitenansicht einer ersten Ausgestaltungsvariante einer erfindungsgemäßen landwirtschaftlichen Maschine mit einer erfindungsgemäßen Pickup-Vorrichtung mit mindestens einem Gleitteller;
Fig. 2 eine symbolische und beispielhafte Darstellung einer erfindungsgemäßen drehbaren Befestigung einer weiterhin erfindungsgemäßen Gleitteller-Anordnung;
Fig. 3 eine symbolische und beispielhafte Ansicht von unten auf eine zweite Ausgestaltungsvariante einer weiterhin erfindungsgemäßen landwirtschaftlichen Maschine mit einer weiterhin erfindungsgemäßen Pickup-Vorrichtung und
Fig. 4 eine symbolische und beispielhafte Ansicht von schräg unten auf eine dritte Ausgestaltungsvariante einer erfindungsgemäßen landwirtschaftlichen Maschine mit einer weiterhin erfindungsgemäßen Pickup-Vorrichtung, einem Förderrotor und einem Rollenniederhalter.

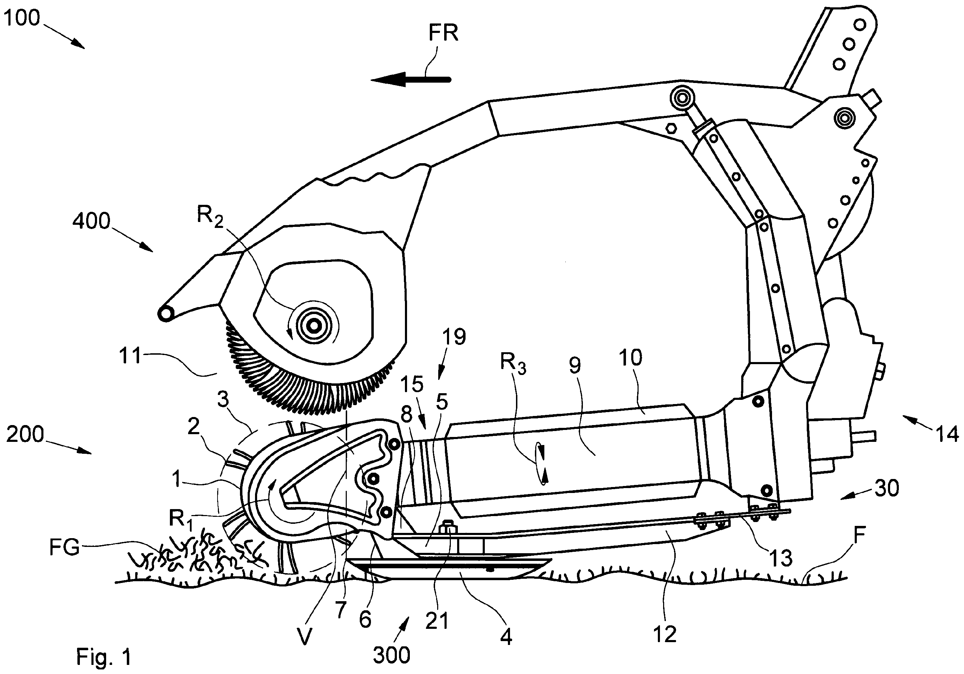

Die Fig. 1 zeigt in einer symbolischen und beispielhaften Seitenansicht eine erste Ausgestaltungsvariante einer erfindungsgemäßen landwirtschaftlichen Maschine 100, die unter anderem eine Pickup-Vorrichtung 200 umfasst. Diese Pickup-Vorrichtung 200 wiederum umfasst eine Pickup-Walze 1 mit Förderzinken 2. Die Pickup-Walze 1 ist angetrieben und nimmt Futter- bzw. Halmgut FG von einer landwirtschaftlichen Fläche F auf, einerseits, weil die Pickup-Walze 1 in einer Rotation R₁ rotiert und andererseits, weil die landwirtschaftliche Maschine 100 sich in einer Fahrtrichtung FR fortbewegt, vorzugsweise vorwärts.

Eine Lauf- und Stützvorrichtung 300 umfasst einen Gleitteller 4, der zunächst in einer lediglich angedeuteten ersten Befestigung 15 angeordnet ist, indem der Gleitteller 4 mittels einer Mutter 21 in einer Aufnahme 5 befestigt ist und die Aufnahme 5 wiederum mittels einer Befestigungslasche 8 an einem Rahmen-Vorderteil 19 angeordnet ist.

Eine optionale Schutzfolie 6 verhindert das Eindringen von Schmutz in das Innere des Gleittellers 4.

Die erfindungsgemäße Lauf- und Stützvorrichtung 300 ist so angeordnet, dass eine gedachte Vertikale V aus einem vordersten Punkt 7 der Lauf- und Stützvorrichtung 300 bzw. des Gleittellers 4 mindestens eine Tangente zu einem Flugkreis 3 der Förderzinken 2 bildet, oder, wie bevorzugt und dargestellt, eine Sekante. Mit dem Flugkreis 3 ist der imaginäre Kreis gemeint, den die Spitzen der Förderzinken 2 beschreiben, wenn die Pickup-Walze 1 in der Rotationsrichtung R₁ rotiert.

Die landwirtschaftliche Maschine 100 umfasst optional des Weiteren ein Querförderband 9, das in einer Querrotation R₃ nach links oder rechts rotieren kann, je nachdem, ob die Schwadablage links oder rechts gewünscht wird. Ebenfalls optional sind an dem Querförderband 9 Querstege 10 angeordnet, für einen verbesserten Transport des Futter- bzw. Halmguts FG. Des Weiteren umfasst die landwirtschaftliche Maschine 100 einen Förderrotor 400, der mittels Förderelementen 11 das Futter- bzw. Halmgut FG von der Pickup-Walze 1 auf das Querförderband 9 weitertransportiert, indem er angetrieben in einer Gegenrotation R₂ zu der Rotation R₁ rotiert.

Weiterhin ist die erfindungsgemäße Lauf- und Stützvorrichtung 300 nicht nur in der vorderen Befestigung 15 an dem Rahmen-Vorderteil 19, sondern auch in einer zweiten, hinteren Befestigung 30 an einem Rahmen-Hinterteil 14 angeordnet. Dieses erfolgt vorzugsweise mittels eines Stabilisators 12 und weiterhin vorzugsweise mittels einer Blattfeder 13.

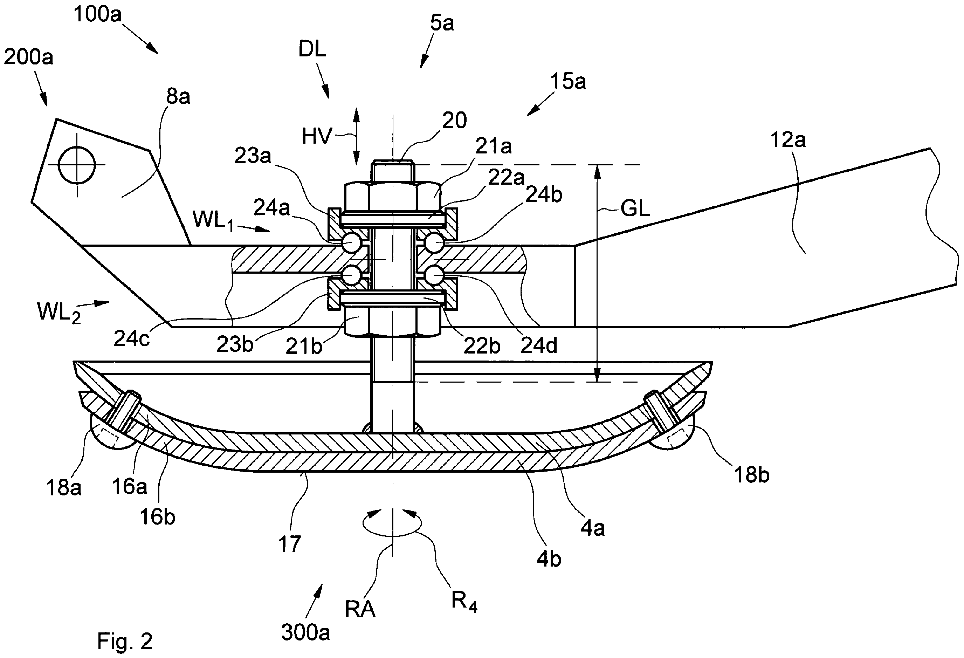

In der Fig. 2 ist eine landwirtschaftliche Maschine 100a mit einer Pickup-Vorrichtung 200a angedeutet, die sich im Unterschied zu der landwirtschaftlichen Maschine 100 aus der Fig. 1 dadurch auszeichnet, dass eine Lauf- und Stützvorrichtung 300a drehbar ausgestaltet ist. Hierfür ist ein Drehlager DL beispielhaft realisiert, indem eine Welle 20 durch eine Aufnahme 5a eines Stabilisators 12a geführt ist und mit einer Mutter 21a und einer Kontermutter 21b, sowie Wälzlagern WL₁ und WL₂ gefasst ist.

Der mechanischen Einfachheit und aber auch der Gewichtsersparnis halber sind Laufrillen für Wälzelemente bzw. Kugeln 24a-24d direkt in dem Material des Stabilisators 12a angeordnet und in Zentrierscheiben 23a und 23b. Diese Zentrierscheiben 23a und 23b nehmen jeweils eine runde Verdickung 22a der Mutter 21a bzw. 22b der Kontermutter 21b formschlüssig auf und zentrieren so die Welle 20 innerhalb der Aufnahme 5a.

Eine Höhenverstellung HV der Lauf- und Stützvorrichtung 300a ist realisiert, indem die Mutter 21a und die Kontermutter 21b innerhalb einer Gewindelänge GL der Welle 20 höhenpositionierbar sind.

Die Fig. 2 zeigt des Weiteren beispielhaft, dass ein erster, oberer Gleitteller 4a zentral an der Welle 20 angeschweißt sein kann und mittels Befestigungsschrauben 18a und 18b ein zweiter, unterer Gleitteller 4b auswechselbar angeordnet ist. Die Gleitteller 4a und 4b weisen jeweils einen konvex gewölbten Rand 16a bzw. 16b auf und optional eine plane Unterseite 17. Die beschriebene Gleitteller-Anordnung ist frei in einer beliebigen Rotationsrichtung R₄ um eine Rotationsachse RA drehbar.

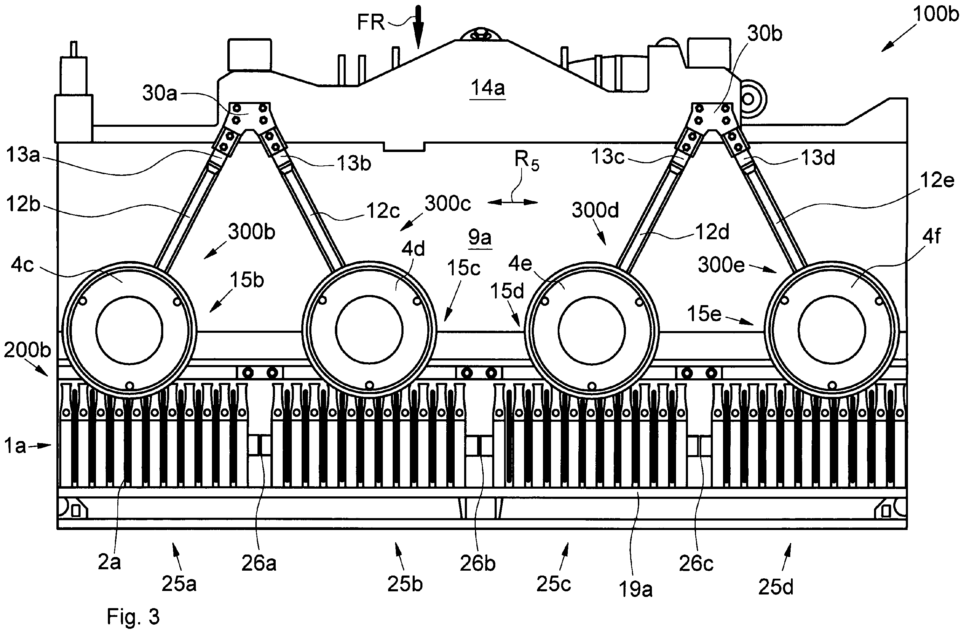

In der Fig. 3 ist in einer symbolischen und beispielhaften Ansicht von unten eine dritte Ausgestaltungsvariante einer erfindungsgemäßen landwirtschaftliche Maschine 100b mit einer erfindungsgemäßen Pickup-Vorrichtung 200b dargestellt, die sich durch eine Pickup-Walze 1a mit beispielsweise vier einzelnen Walzen-Elementen 25a-25d auszeichnet, jeweils mit Förderzinken 2a. Die Pickup-Walze 1a ist durch einen nicht näher dargestellten Antrieb angetrieben, der an nur einem der Walzen-Elemente 25a-25d ansetzt und somit sind für die Übertragung des Antriebsdrehmomentes zwischen den Walzen-Elementen 25a-25d symbolisch Kreuz- oder Freigelenke 26a-26c dargestellt. Es können aber auch Einzelantriebe für jedes Walzen-Element vorgesehen sein.

Jedenfalls sind die Walzen-Elemente 25a-25d auf diese Weise an einem Rahmen-Vorderteil 19a beweglich angeordnet, jeweils gekoppelt bzw. fix miteinander verbunden, in lediglich angedeuteten vorderen Befestigungen 15b-15e, mit Lauf- und Stützvorrichtungen 300b-300e bzw. Gleittellern 4c-4f.

Die Gleitteller 4c-4f wiederum sind jeweils mit Stabilisatoren 12b-12e und jeweils mit Blattfedern 13a-13d mit optional paarweise kombinierten hinteren Befestigungen 30a und 30b an einem Rahmen-Hinterteil 14a befestigt, zusätzlich zu den vorderen Befestigungen 15b-15e.

Auf diese Weise ist eine landwirtschaftliche Maschine 100b bzw. eine Pickup-Vorrichtung 200b mit einer hervorragenden Bodenanpassung realisiert, weil jede Lauf- und Stützvorrichtung 300b-300e bzw. jeder Gleitteller 4c-4f "sein" Walzen-Element 25a-25d in Funktion des Bodenniveaus anhebt oder absenkt. Die maximale Hubbewegung, welche die Walzen-Elemente 25a-25d beschreiben können, ist vorzugsweise mittels nicht näher dargestellter Federn so federunterstützt, dass alleine das Gewicht der Walzen-Elemente 25a-25d sie vorzugsweise annähernd in der Mitte ihrer maximalen Hubbewegung "pendelnd" hält.

Die landwirtschaftliche Maschine 100b weist ansonsten ein Querförderband 9a auf, das beliebig in einer Querrotation R₅ rotierbar ist.

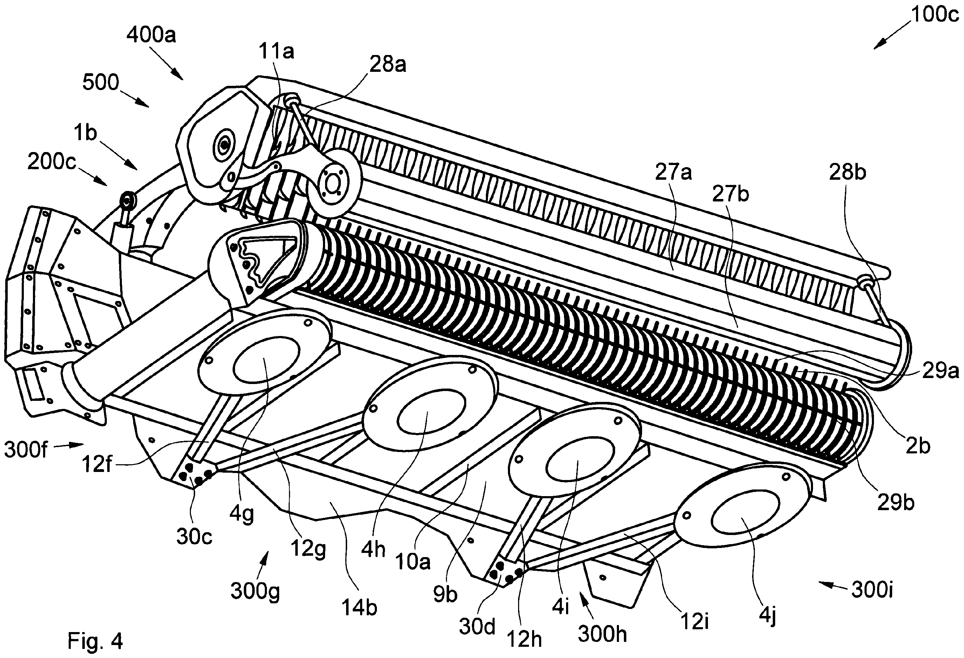

Die Fig. 4 zeigt eine weiterhin bevorzugte Ausgestaltungsvariante einer erfindungsgemäßen landwirtschaftlichen Maschine 100c mit einer erfindungsgemäßen Pickup-Vorrichtung 200c. Eine Pickup-Walze 1b hat Förderzinken 2b, die in linearen Zinkenreihen 29a und 29b angeordnet sein können. Unterhalb der Pickup-Vorrichtung 200b und unterhalb eines Querförderbandes 9b mit Querstegen 10a sind Lauf- und Stützvorrichtungen 300f-300i angeordnet, mit Gleittellern 4g-4j und Stabilisatoren 12f-12i, wobei die Letzteren mittels hinterer Befestigungen 30c und 30d an einem Rahmen-Hinterteil 14b angeordnet sind.

Die landwirtschaftliche Maschine 100c umfasst des Weiteren einen Förderrotor 400a mit Förderelementen 11a, sowie einen Rollenniederhalter 500 mit Blechprofilen 27a und 27b, die an ihren Kanten optional nicht mehr näher dargestellte Riffelungen aufweisen können. Der Rollenniederhalter 500 ist frei pendelnd aufgehängt und hält die Rollen und den Futterstrang mit der Kraft seines Gewichtes, aber auch mit der Kraft von Teleskopfedern 28a und 28b nieder.

### Bezugszeichenliste

- 1, 1a, 1b -: Pickup-Walze
- 2, 2a, 2b -: Förderelement, Förderzinke von 1
- 3 -: Flugkreis
- 4, 4a-4j -: Gleitteller
- 5, 5a -: Aufnahme
- 6 -: Schutzfolie
- 7 -: vorderster Punkt von 4 bzw. 300
- 8, 8a -: Befestigungslasche
- 9, 9a, 9b -: Querförderband
- 10, 10a -: Quersteg
- 11, 11a -: Förderelement von 400
- 12, 12a-12i -: Stabilisator
- 13, 13a-13d -: Blattfeder
- 14, 14a, 14b -: Rahmen-Hinterteil
- 15, 15a-15e -: vordere Befestigung
- 16a, 16b -: konvex gewölbter Rand
- 17 - plane: Unterseite, Unterseite von 4
- 18a, 18b -: Befestigungsschraube
- 19, 19a -: Rahmen-Vorderteil
- 20 - Welle: oder Achse
- 21, 21a, 21b -: Mutter, Kontermutter
- 22a, 22b -: runde Verdickung
- 23a, 23b -: Zentrierscheibe mit Laufrille
- 24a-24d -: Wälzelement bzw. Kugel
- 25a-25d -: Walzen-Element
- 26a-26c -: Kreuz- oder Freigelenk
- 27a, 27b -: Blechprofil
- 28a, 28b -: Teleskopfeder
- 29a, 29b -: Zinkenreihe
- 30, 30a-30d -: hintere Befestigung

- 100, 100a-100c -: landwirtschaftliche Maschine
- 200, 200a-200c -: Pickup-Vorrichtung
- 300, 300a-300i -: Lauf- bzw. Stützvorrichtung
- 400, 400a -: Förderrotor, Förderhilfe
- 500 -: Rollenniederhalter
- DL -: Drehlager
- F -: landwirtschaftliche Fläche
- FG -: Futtergut, Halmgut
- FR -: Fahrtrichtung
- GL -: Gewindelänge
- HV -: Höhenverstellung
- R₁ -: Rotation von 1
- R₂ -: Gegenrotation von 400 zu R₁
- R₃, R₅ -: Querrotation von 9
- R₄ -: Rotation von 300a
- RA -: Rotationsachse
- V -: Vertikale
- WL₁, WL₂ -: Wälzlager

## Patentansprüche

1. Landwirtschaftliche Maschine (100, 100a-100c) mit mindestens einer Pickup-Vorrichtung (200, 200a-200c), wobei die Pickup-Vorrichtung (200, 200a-200c) mindestens eine in einer Rotation (R₁) rotierbare Pickup-Walze (1, 1a, 1b) mit mindestens zwei Walzen-Elementen (25a-25d) umfasst, mit Förderzinken (2, 2a, 2b) zur Aufnahme von Futter- bzw. Halmgut (FG) von einer landwirtschaftlichen Fläche (F), und wobei die Pickup-Vorrichtung (200, 200a-200c) mindestens eine Lauf- und Stützvorrichtung (300, 300a-300i) umfasst, wobei die Lauf- und Stützvorrichtung (300, 300a-300i) der Pickup-Vorrichtung (200, 200a-200c) ausschließlich Gleitteller (4, 4a-4j) mit einem annähernd kreisförmigen oder ovalen, konvex gewölbten Rand (16a, 16b) umfasst, und die Lauf- und Stützvorrichtung (300) einen in einer Fahrtrichtung (FR) vordersten Punkt (7) des Gleittellers (4, 4a-4j) ausbildet, aus dem eine Vertikale (V) zu einem Flugkreis (3) der Förderzinken (2) mindestens eine Tangente oder eine Sekante darstellt **und** die Lauf- und Stützvorrichtungen (300, 300a-300i) in der vorderen Befestigung (15, 15a-15e) an einem Rahmen-Vorderteil (19, 19a) der Pickup-Vorrichtung (200, 200a-200c) befestigt sind und mittels mindestens eines Stabilisators (12, 12a-12i) in einer hinteren Befestigung (30, 30a-30d) an einem Rahmen-Hinterteil (14, 14a, 14b) der Pickup-Vorrichtung (200, 200a-200c), wobei zwischen dem Stabilisator (12, 12a-12i) und der hinteren Befestigung (30, 30a-30d) mindestens eine Blattfeder (13, 13a-13d) angeordnet ist, **dadurch gekennzeichnet, dass** je ein Gleitteller (4, 4a-4j) mittig zu je einem Walzen-Element (25a-25d) angeordnet ist.

2. Landwirtschaftliche Maschine (100) nach Anspruch 1, **dadurch gekennzeichnet, dass** die Lauf- und Stützvorrichtung (300) mindestens einen in einer Aufnahme (5) fix angeordneten Gleitteller (4) umfasst.

3. Landwirtschaftliche Maschine (100) nach Anspruch 2, **dadurch gekennzeichnet, dass** an einer Unterseite (17) des Gleittellers (4) in Fahrtrichtung (FR) angeordnete Längsrillen angeordnet sind und der Gleitteller (4) oval oder kufenförmig ist.

4. Landwirtschaftliche Maschine (100a) nach nach einem der vorhergehenden Ansprüche 2 oder 3, **dadurch gekennzeichnet, dass** die Lauf- und Stützvorrichtung (300a) mindestens einen in der Aufnahme (5a) in einem Drehlager (DL) drehbar angeordneten Gleitteller (4a, 4b) umfasst.

5. Landwirtschaftliche Maschine (100, 100a-100c) nach einem der vorhergehenden Ansprüche, **dadurch gekennzeichnet, dass** die Lauf- und Stützvorrichtung (300, 300a-300i) eine Höhenverstellung (HV) mit einer Gewindestange und einem Stellmotor umfasst.

6. Landwirtschaftliche Maschine (100, 100a-100c) nach einem der vorhergehenden Ansprüche, **dadurch gekennzeichnet, dass** die Lauf- und Stützvorrichtung (300, 300a-300i) Gleitteller (4, 4b-4j) umfasst, die an einem oberen Gleitteller (4a) oder an einer Halterung auswechselbar angeordnet sind.

7. Landwirtschaftliche Maschine (100, 100a-100c) nach einem der vorhergehenden Ansprüche 1, 2 oder 4-6, **dadurch gekennzeichnet, dass** die Gleitteller (4, 4a-j) eine plane Unterseite (17) ausformen.

8. Landwirtschaftliche Maschine (100, 100a-100c) nach einem der vorhergehenden Ansprüche, **dadurch gekennzeichnet, dass** die Gleitteller (4, 4a-4j) eine Unterseite (17) ausformen, die poliert oder oberflachenbehandelt oder beschichtet ist.

9. Landwirtschaftliche Maschine (100, 100a-100c) nach einem der vorhergehenden Ansprüche, **dadurch gekennzeichnet, dass** die Pickup-walze (1, 1a, 1b) Zinkenreihen (29a, 29b) umfasst, die helikoidal angeordnet sind.

10. Landwirtschaftliche Maschine (100b) nach einem der vorhergehenden Ansprüche, **dadurch gekennzeichnet, dass** die Pickup-Walze (1a) eine biegsame Welle umfasst.

11. Landwirtschaftliche Maschine (100b) nach einem der vorhergehenden Ansprüche, **dadurch gekennzeichnet, dass** die Walzen-Elemente (25a-25d) mit Kreuz- oder Freigelenken (26a-26c) miteinander verbunden sind.

12. Landwirtschaftliche Maschine (100b) nach einem der vorhergehenden Ansprüche, **dadurch gekennzeichnet, dass** die Walzen-Elemente (25a-25d) mit Einzelantrieben einzeln antreibbar sind.

13. Landwirtschaftliche Maschine (100b) nach einem der vorhergehenden Ansprüche, **dadurch gekennzeichnet, dass** das Gewicht eines Walzen-Elementes (25a-25d) federunterstützt das Walzen-Element (25a-25d) annähernd in der Mitte einer maximal möglichen Hubbewegung des Walzen-Elementes (25a-25d) hält.

14. Landwirtschaftliche Maschine (100c) nach einem der vorhergehenden Ansprüche, **dadurch gekennzeichnet, dass** die landwirtschaftliche Maschine (100c) einen angetriebenen Förderrotor (400a) und einen frei laufenden Rollenniederhalter (500) umfasst, der frei pendelnd und mit Teleskopfedern (28a, 28b) federunterstützt angeordnet ist.

15. Verfahren zur Anwendung einer landwirtschaftlichen Maschine (100c) nach Anspruch 14, mit einer Pickup-Vorrichtung (200c), einem Querförderband (9b), einem Förderrotor (400a) und einem Rollenniederhalter (500), wobei die Pickup-Vorrichtung (200a) dreh- und höhenverstellbare Lauf- und Stützvorrichtungen (300a) mit Gleittellern (4a, 4b) umfasst, **dadurch gekennzeichnet, dass** folgende grundsätzlichen Verfahrensschritte ausgeführt werden:
a) - Einstellen der Höhenverstellung (HV) der Lauf- und Stützvorrichtung (300a);
b) - Rotieren einer Pickup-Walze (1, 1b) in einer Rotation (R₁);
c) - Rotieren des Förderrotors (400, 400a) in einer Gegenrotation (R₂);
d) - Rotieren des Querförderbandes (9, 9b) in einer Querrotation (R₃, R₅);
e) - Losfahren mit der landwirtschaftlichen Maschine (100, 100c) in einer Fahrtrichtung (FR).

## Claims

1. Agricultural machine (100, 100a-100c) with at least one pickup device (200, 200a-200c), wherein the pickup device (200, 200a-200c) comprises at least one pickup roller (1, 1a, 1b) rotatable in a rotation (R₁), with at least two roller elements (25a-25d), with conveyor tines (2, 2a, 2b) for the take-up of fodder or stalk stock (FG) from an agricultural land (F), and wherein the pickup device (200, 200a-200c) comprises at least one running and supporting device (300, 300a-300i), wherein the running and supporting device (300, 300a-300i) of the pickup device (200, 200a-200c) comprises exclusively sliding plates (4, 4a-4j) with an approximately circular or oval, convexly curved edge (16a, 16b), and the running and supporting device (300) forms a frontmost point (7) of the sliding plate (4, 4a-4j) in a driving direction (FR), from which point a vertical (V) to a flight circle (3) of the conveyor tines (2) represents at least one tangent or a secant, and the running and supporting devices (300, 300a-300i) are fastened in the front fastening (15, 15a-15e) to a frame front portion (19, 19a) of pickup device (200, 200a-200c) and by means of at least one stabilizer (12, 12a-12i) in a rear fastening (30, 30a-30d) to a frame rear portion (14, 14a), 14b) of the pick-up device (200, 200a-200c), wherein between the stabilizer (12, 12a-12i) and the rear fastening (30, 30a-30d) at least one leaf spring (13, 13a-13d) is arranged, **characterized in that** one sliding plate (4, 4a-4j) each is arranged in the middle of each roller element (25a-25d).

2. Agricultural machine (100) according to claim 1, **characterized in that** the running and supporting device (300) comprises at least one sliding plate (4) fixedly arranged in an acceptance (5).

3. Agricultural machine (100) according to claim 2, **characterized in that** on an underside (17) of the sliding plate (4) longitudinal grooves are arranged in the driving direction (FR) and the sliding plate (4) is oval or skid-shaped.

4. Agricultural machine (100a) according to one of the preceding claims 2 or 3, **characterized in that** the running and supporting device (300a) comprises at least one sliding plate (4a, 4b) arranged rotatably in the acceptance (5a) in a pivot bearing (DL).

5. Agricultural machine (100, 100a-100c) according to one of the preceding claims, **characterized in that** the running and supporting device (300, 300a-300i) comprises a height adjustment (HV) with a threaded rod and a servomotor.

6. Agricultural machine (100, 100a-100c) according to one of the preceding claims, **characterized in that** the running and supporting device (300, 300a-300i) comprises sliding plates (4, 4b-4j), which are arranged interchangeably on an upper sliding plate (4a) or on a support.

7. Agricultural machine (100, 100a-100c) according to one of the preceding claims 1, 2 or 4-6, **characterized in that** the sliding plates (4, 4a-j) form a plane underside (17).

8. Agricultural machine (100, 100a-100c) according to one of the preceding claims, **characterized in that** the sliding plates (4, 4a-4j) form an underside (17), which is polished or surface-treated or coated.

9. Agricultural machine (100, 100a-100c) according to one of the preceding claims, **characterized in that** the pickup roller (1, 1a, 1b) comprises tine rows (29a, 29b) which are arranged helicoidally.

10. Agricultural machine (100b) according to one of the preceding claims, **characterized in that** the pickup roller (1a) comprises a flexible shaft.

11. Agricultural machine (100b) according to one of the preceding claims, **characterized in that** the roller elements (25a-25d) are connected to each other by cross joints or free joints (26a-26c).

12. Agricultural machine (100b) according to one of the preceding claims, **characterized in that** the roller elements (25a-25d) are individually drivable with individual drives.

13. Agricultural machine (100b) according to one of the preceding claims, **characterized in that** the weight of a roller element (25a-25d) holds the roller element (25a-25d) spring supported approximately in the middle of a maximum possible lifting motion of the roller element (25a-25d).

14. Agricultural machine (100c) according to one of the preceding claims, **characterized in that** the agricultural machine (100c) comprises a driven conveyor rotor (400a) and a free-running roller hold-down device (500) which is arranged free-floating and spring-supported with telescopic springs (28a, 28b).

15. Procedure for the use of an agricultural machine (100c) according to claim 14, with a pickup device (200c), a cross conveyor belt (9b), a conveyor rotor (400a) and a roller hold-down device (500), where the pickup device (200a) comprises rotationally and vertically adjustable running and supporting devices (300a) with sliding plates (4a, 4b), **characterized in that** the following fundamental procedure steps are carried out:
a) - adjusting the height adjustment (HV) of the running and supporting device (300a);
b) - rotating a pickup roller (1, 1b) in a rotation (R₁);
c) - rotating the conveyor rotor (400, 400a) in a counter-rotation R₂;
d) - rotating the cross conveyor belt (9, 9b) in a cross rotation (R₃, R₅) ;
e) - starting the agricultural machine (100, 100c) in a driving direction (FR).

## Revendications

1. Machine agricole (100, 100a-100c) avec au moins un dispositif de ramassage (200, 200a-200c), où le dispositif de ramassage (200, 200a-200c) comprend au moins un rouleau de ramassage (1, la, 1b) rotatif dans une rotation (R₁) avec au moins deux éléments de rouleau (25a-25d), avec des dents transporteuses (2, 2a, 2b) pour prise de fourrage ou de tiges de fourrage (FG) d'une zone agricole (F), et où le dispositif de ramassage (200, 200a-200c) comprend au moins un dispositif de roulement et de support (300, 300a-300i), où le dispositif de roulement et de support (300, 300a-300i) du dispositif de ramassage (200, 200a-200c) comprend exclusivement des plateaux glissants (4, 4a-4j) avec un bord bombé convexe (16a, 16b) à peu près circulaire ou ovale, et le dispositif de roulement et de support (300) forme un point extrême avant (7) des plateaux glissants (4, 4a-4j) dans un sens de la marche (FR), à partir duquel une verticale (V) à un cercle de vol (3) des dents transporteuses (2) représente au moins une tangente ou une sécante et les dispositifs de roulement et de support (300, 300a-300i) sont fixés dans la fixation avant (15, 15a-15e) à une partie avant de cadre (19, 19a) du dispositif de ramassage (200, 200a-200c) et au moyen d'au moins un stabilisateur (12, 12a-12i) dans une fixation arrière (30, 30a-30d) à une partie arrière de cadre (14, 14a), 14b) du dispositif de ramassage (200, 200a-200c), où entre le stabilisateur (12, 12a-12i) et la fixation arrière (30, 30a-30d) est disposé au moins un ressort à lames (13, 13a-13d), **caractérisé en ce qu'**un chaque plateau glissant (4, 4a-4j) est disposé au milieu de chaque élément de rouleau (25a-25d).

2. Machine agricole (100) selon la revendication 1, **caractérisée en ce que** le dispositif de roulement et de support (300) comprend au moins un plateau glissant (4) disposé de manière fixe dans un receptaclé (5).

3. Machine agricole (100) selon la revendication 2, **caractérisée en ce que** sur une face inférieure (17) du plateau glissant (4) dans le sens de la marche (FR) sont disposées des rainures longitudinales et le plateau glissant (4) est oval ou en forme de patin.

4. Machine agricole (100a) selon l'une des revendications précédentes 2 ou 3, **caractérisée en ce que** le dispositif de roulement et de support (300a) comprend au moins un plateau glissant (4a, 4b) disposé rotatif dans le réceptacle (5a) dans un palier pivotant (DL).

5. Machine agricole (100, 100a-100c) selon l'une des revendications précédentes, **caractérisée en ce que** le dispositif de roulement et de support (300, 300a-300i) comprend un réglage en hauteur (HV) avec une tige filetée et un servomoteur.

6. Machine agricole (100, 100a-100c) selon l'une des revendications précédentes, **caractérisée en ce que** le dispositif de roulement et de support (300, 300a-300i) comprend des plateaux glissants (4, 4b-4j) qui sont disposés de façon interchangeable sur un plateau glissant supérieur (4a) ou sur un support.

7. Machine agricole (100, 100a-100c) selon l'une des revendications précédentes 1, 2 ou 4-6, **caractérisée en ce que** les plateaux glissants (4, 4a-j) forment une face inférieure plane (17).

8. Machine agricole (100, 100a-100c) selon l'une des revendications précédentes, **caractérisée en ce que** les plateaux glissants (4, 4a-4j) forment une face inférieure (17), qui est polie ou traitée en surface ou revêtue.

9. Machine agricole (100, 100a-100c) selon l'une des revendications précédentes, **caractérisée en ce que** le rouleau de ramassage (1, 1a, 1b) comprend des rangées de dents (29a, 29b) qui sont disposées hélicoïdal.

10. Machine agricole (100b) selon l'une des revendications précédentes, **caractérisée en ce que** le rouleau de ramassage (1a) comprend un arbre flexible.

11. Machine agricole (100b) selon l'une des revendications précédentes, **caractérisée en ce que** les éléments de rouleau (25a-25d) sont reliés entre eux par des joints de cardan ou joints libres (26a-26c).

12. Machine agricole (100b) selon l'une des revendications précédentes, **caractérisée en ce que** les éléments de rouleau (25a-25d) sont entraînables individuellement par des entraînements individuels.

13. Machine agricole (100b) selon l'une des revendications précédentes, **caractérisée en ce que** le poids d'un élément de rouleau (25a-25d) soutien par ressort l'élément de rouleau (25a-25d) approximativement au milieu d'un mouvement de levage maximal possible de l'élément de rouleau (25a-25d).

14. Machine agricole (100c) selon l'une des revendications précédentes, **caractérisée en ce que** la machine agricole (100c) comprend un rotor de convoyeur entraîné (400a) et un maintien de rouleau en bas (500) à roue libre qui est disposé oscillant librement et soutenu par des ressorts télescopiques (28a,28b).

15. Procédure d'utilisation d'une machine agricole (100c) selon la revendication 14, avec un dispositif de ramassage (200c), une bande transporteuse transversale (9b), un rotor de convoyeur (400a) et un maintien de rouleau en bas (500), où le dispositif de ramassage (200a) comprend des dispositifs de roulement et de support (300a) réglables en rotation et en hauteur avec des plateaux glissants (4a, 4b), **caractérisé en ce que** les étapes procédurales fondamentales suivantes sont exécutées:
a) - ajustage du réglage en hauteur (HV) du dispositif de roulement et de support (300a);
b) - rotation d'un rouleau de ramassage (1, 1b) dans une rotation (R₁) ;
c) - rotation de rotor du convoyeur (400, 400a) dans une contre-rotation (R₂) ;
d) - rotation de la bande transporteuse transversale (9, 9b) dans une rotation transversale (R₃, R₅);
e) - mise en marche de la machine agricole (100, 100c) dans un sens de marche (FR).
